(19) Europäisches Patentamt
European Patent Office
Office européen des brevets

(11) **EP 0 959 608 A1**

(12) **EUROPÄISCHE PATENTANMELDUNG**

(43) Veröffentlichungstag:
24.11.1999 Patentblatt 1999/47

(51) Int. Cl.⁶: **H04M 19/04**

(21) Anmeldenummer: 99102982.8

(22) Anmeldetag: 15.02.1999

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: 19.05.1998 DE 19822370

(71) Anmelder: **ROBERT BOSCH GMBH
70442 Stuttgart (DE)**

(72) Erfinder: **Von Haefen, Holger
38300 Wolfenbuettel (DE)**

(54) **Telekommunikationsendgerät mit anpassung des Ruftons an Umgebungsgeräusche**

(57)    Es wird ein Telekommunikationsendgerät (1) vorgeschlagen, das eine Anpassung des Ruftons an Geräusche in einer Umgebung des Telekommunikationsendgerätes (1) ermöglicht. Das Telekommunikationsendgerät (1) umfaßt einen Lautsprecher (5) und ein Mikrophon (10), wobei die Lautstärke des am Lautsprecher (5) wiedergegebenen Ruftones zur Signalisierung eines eingehenden Rufes einstellbar ist. Das Mikrophon (10) empfängt bei einem eingehenden Ruf Geräusche aus einer Umgebung des Telekommunikationsendgerätes (1). Es erfolgt eine Ermittlung mindestens einer charakteristischen Meßgröße (A, f) der Geräusche. Der Lautsprecher (5) gibt den Rufton in Abhängigkeit der mindestens einen ermittelten Meßgröße (A, f) so ab, daß er sich in der mindestens einen Meßgröße (A, f) von den aus der Umgebung empfangenen Geräuschen um mindestens einen vorgegebenen Wert (25, 30) unterscheidet.

Fig. 1

## Beschreibung

Stand der Technik

Die Erfindung geht von einem Telekommunkiationsendgerät nach der Gattung des Hauptanspruchs aus.

Aus dem Katalog „Bosch Heim- und Bürokommunikation 1997/98. Gute Unterhaltung in allen Lebenslagen" ist bereits das Tischtelefon „T-Com 615" bekannt, das ein Mikrophon und einen Lautsprecher aufweist, wobei die Ruftonlautstärke einstellbar ist.

Vorteile der Erfindung

Das erfindungsgemäße Telekommunkiationsendgerät mit den Merkmalen des Hauptanspruchs hat demgegenüber den Vorteil, daß der vom Telekommunikationsendgerät abgegebene Rufton bei einem eingehenden Ruf von den gerade in einer Umgebung des Telekommunkiationsendgerätes vorherrschenden Geräuschen unterscheidbar am Lautsprecher des Telekommunikationsendgerätes abgegeben werden kann. Der Rufton wird damit so an die aktuellen Umgebungsgeräusche des Telekommunikationsendgerätes angepaßt, daß er sich für eine Wahrnehmung durch den Benutzer ausreichend von diesen Geräuschen unterscheidet.

Durch die in den Unteransprüchen aufgeführten Maßnahmen sind vorteilhafte Weiterbildungen und Verbesserungen des im Hauptanspruch angegebenen Telekommunikationsendgerätes möglich.

Ein besonderer Vorteil besteht darin, daß als Meßgröße der Geräuschpegel vorgesehen ist und daß der Lautsprecher den Rufton mit einer Lautstärke abgibt, die innerhalb eines vorgegebenen Lautstärkebereiches den Geräuschpegel der aus der Umgebung des Telekommunkiationsendgerätes vom Mikrofon empfangenen Geräusche um einen vorgegebenen Wert überschreitet. Auf diese Weise wird die Lautstärke des Ruftons so an den Geräuschpegel in der Umgebung des Telekommunikationsendgerätes angepaßt, daß einerseits ein eingehender Ruf auch bei einem hohen Geräuschpegel der das Telekommunkiationsendgerät umgebenden Geräusche von einem Benutzer noch wahrgenommen werden kann. Andererseits wird durch die Anpassung der Lautstärke des Ruftons an die das Telekommunikationsendgerät umgebenden Geräusche der Rufton nicht selbst zur Lärmquelle bei niedrigem Geräuschpegel der das Telekommunikationsendgerät umgebenden Geräusche, wie es etwa bei einer festen Einstellung der Ruftonlautstärke auf eine lautstarke Signalisierung der Fall wäre.

Ein weiterer Vorteil besteht darin, daß als Meßgröße die Frequenz vorgesehen ist und daß der Lautsprecher den Rufton mit mindestens einer Frequenz abgibt, die innerhalb eines vorgegebenen Frequenzbereiches von den Frequenzen der aus der Umgebung des Telekommunikationsendgerätes vom Mikrofon empfangenen Geräusche um mindestens einen vorgegebenen Wert abweicht. Durch die auf diese Weise bewirkte Anpassung der Frequenz des Ruftons an die Frequenzen der in der Umgebung des Telekommunikationsendgerätes vorliegenden Geräusche läßt sich die Wahrnehmung des Ruftons für den Benutzer ebenfalls verbessern.

Ein besonderer Vorteil besteht darin, daß die Ermittlung der mindestens einen Meßgröße in Ruftonpausen eines eingehenden Rufes erfolgt und daß die Einstellung der Wiedergabe des Ruftons am Lautsprecher während des Rufvorgangs variabel in Abhängigkeit der mindestens einen in den Ruftonpausen ermittelten Meßgröße erfolgt. Auf diese Weise kann der Rufton auch variabel an sich während des Rufvorgangs ändernde Geräusche in der Umgebung des Telekommunikationsendgerätes angepaßt werden, so daß während der gesamten Dauer des Rufvorgangs eine Unterscheidung des Ruftons von den das Telekommunikationsendgerät umgebenden Geräuschen sichergestellt wird und der Rufton bei geringer oder geringer werdender Geräuschbelastung in der Umgebung des Telekommunikationsendgerätes während des Rufvorgangs nicht selbst zur Stör- oder Lärmquelle wird.

Zeichnung

Ein Ausführungsbeispiel der Erfindung ist in der Zeichnung dargestellt und in der nachfolgenden Beschreibung näher erläutert. Es zeigen Figur 1 ein Blockschaltbild eines Telekommunikationsendgerätes, Figur 2 einen Ablaufplan für eine Steuerung des Telekommunikationsendgerätes, Figur 3 ein Frequenzspektrum eines Ruftones des Telekommunikationsendgerätes und von Geräuschen in der Umgebung des Telekommunikationsendgerätes und Figur 4 einen zeitlichen Verlauf eines Geräuschpegels von das Telekommunikationsendgerät umgebenden Geräuschen und des Ruftonpegels während eines eingehenden Rufes.

Beschreibung des Ausführungsbeispiels

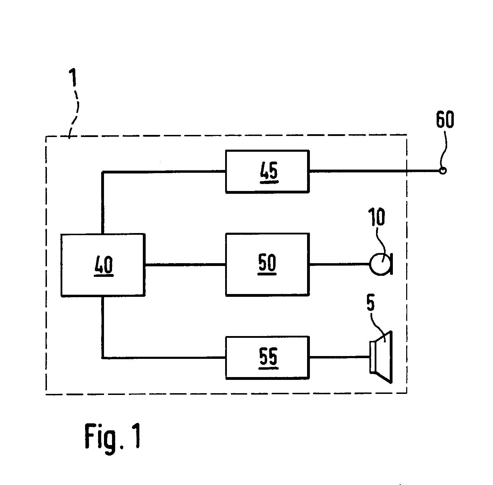

In Figur 1 kennzeichnet 1 ein Telekommunikationsendgerät, das beispielsweise als schnurgebundenes Tisch- oder Wandtelefonendgerät, als Schnurlostelefon, als Mobiltelefon, als Handfunkgerät, als Betriebsfunkgerät oder dergleichen ausgebildet sein kann. Die Erfindung wird im folgenden anhand eines als schnurgebundenes Telefonendgerät ausgebildeten Telekommunicationsendgerätes 1 beschrieben. Das Telefonendgerät 1 umfaßt einen Leitungsanschluß 60 zum Anschluß einer beispielsweise analogen Zweidraht-Telefonleitung. Der Leitungsanschluß 60 ist über eine Leitungsanschaltung 45 mit einer Steuerung 40 des Telefonendgerätes 1 verbunden. Für den Fall der Ausbildung des Telekommunikationsendgerätes 1 als Schnurlostelefon, als Mobiltelefon oder Funkgerät wird an Stelle des Leitungsanschlusses 60 ein Antennenanschluß oder eine Sende-Empfangsantenne und an Stelle der Leitungsanschaltung 45 ein Sende-/Empfangsteil vorgesehen. Das Telefonendgerät 1 umfaßt weiterhin ein Mikrophon 10, das als Freisprechmikrophon ausgebildet sein kann und über einen Analog-/Digitalwandler 50 an die Steuerung 40 angeschlossen ist. Das Telefonendgerät 1 umfaßt weiterhin einen Lautsprecher 5 zur Wiedergabe von Ruftönen bei einem eingehenden Ruf. Der Lautsprecher 5 ist über einen digitalen Signalprozessor 55 ebenfalls an die Steuerung 40 angeschlossen. Über den Lautsprecher 5 kann zusätzlich eine Lauthörfunktion des Telefonendgerätes 1 realisiert werden. Für den Fall der Ausbildung des Telekommunikationsendgerätes 1 als Schnurlostelefon, als Mobiltelefon oder als Funkgerät kann das Mikrophon 10, das in der Sprechkapsel vorgesehene Mikrophon und der Lautsprecher 5 der in der Hörkapsel vorgesehene Lautsprecher sein.

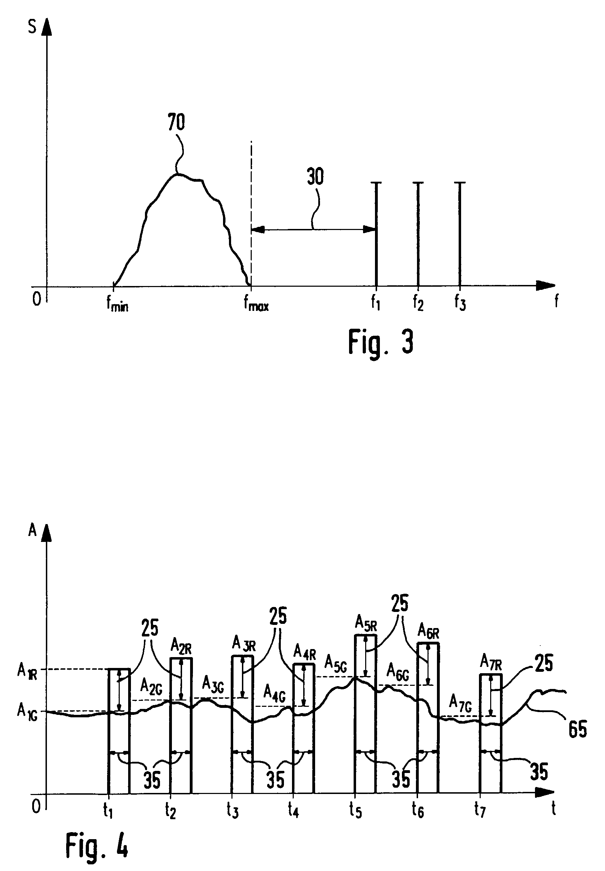

Wenn die Steuerung 40 des Telefonendgerätes 1 über die Leitungsanschaltung 45 einen eingehenden Ruf detektiert, so aktiviert sie das Mikrophon 10 zum Empfang von Geräuschen aus einer Umgebung des Telefonendgerätes 1, falls das Mikrophon 10 nicht bereits aktiviert ist. Im Falle der Ausbildung des Telekommunikationsendgerätes 1 als Schnurlostelefon, als Mobiltelefon oder als Funkgerät detektiert die Steuerung 40 einen eingehenden Ruf über das Sende-/Empfangsteil, das anstelle der Leitungsanschaltung 45 vorgesehen ist. Die vom Mikrophon 10 empfangenen Geräusche oder akustischen Signale werden dem Analog-/Digitalwandler 50 zugeführt und dort digitalisiert. Die digitalisierten akustischen Signale werden dann der Steuerung 40 zugeführt. In der Steuerung 40 findet dann eine Ermittlung mindestens einer charakteristischen Meßgröße der digitalisierten akustischen Signale statt. Als Meßgröße kann dabei der Geräuschpegel oder der Signalpegel A in Abhängigkeit der Zeit t gemäß Figur 4 ermittelt werden. Dabei ergibt sich beispielhaft der mit dem Bezugszeichen 65 gekennzeichnete verlauf des Signalpegels A der digitalisierten akustischen Signale, der im folgenden als Signalpegelverlauf bezeichnet wird. Die Detektion des eingehenden Rufs erfolgt dabei zum Zeitpunkt $t = 0$. Die Messung des Signalpegels A erfolgt dabei bereits vor Abgabe des ersten Ruftones. Zu einem ersten Zeitpunkt $t_1 > 0$ soll die Abgabe des ersten Ruftones erfolgen. Zwischen der Zeit $t = 0$ und dem ersten Zeitpunkt $t_1$ wird ein erster Maximalwert $A_{1G}$ von der Steuerung 40 für den Signalpegelverlauf 65 ermittelt. Die Steuerung 40 veranlaßt dann von Beginn des ersten Zeitpunktes $t_1$ für eine Ruftondauer 35 den Lautsprecher 5 über den digitalen Signalprozessor 55 zur Abgabe des ersten Ruftons mit einem Signalpegel $A_{1R}$, der den ersten Maximalwert $A_{1G}$ des Signalpegelverlaufs 65 um mindestens einen ersten vorgegebenen Wert 25 überschreitet. Der erste vorgegebene Wert 25 ist dabei mindestens so groß zu wählen, daß der erste Rufton in seiner Lautstärke so deutlich von den vor Beginn des ersten Ruftons gemessenen Geräuschen in der Umgebung des Telefonendgerätes 1 unterschieden werden kann, daß der erste Rufton für einen Benutzer mit durchschnittlichem Hörvermögen mühelos erkannt werden kann.

Die folgenden Ruftöne können dann mit dem Signalpegel $A_{1R}$ des ersten Ruftons vom Lautsprecher abgegeben werden. Dabei würde jedoch eine Änderung des Signalpegelverlaufs 65 nicht berücksichtigt. Bei ansteigendem Signalpegelverlauf 65 könnte die Wahrnehmung des Ruftons verschlechtert werden und bei Abnahme des Signalpegelverlaufs 65 könnte der Rufton als zu laut empfunden werden. Aus diesem Grund empfiehlt sich eine adaptive Nachführung des Signalpegels der Ruftöne während der Dauer des Rufvorgangs in Abhängigkeit des Signalpegelverlaufs 65. Der Signalpegelverlauf 65 wird dabei in den Ruftonpausen des eingehenden Rufes ermittelt, damit die Meßergebnisse nicht durch die Ruftöne selbst beeinflußt werden. Gemäß Figur 4 werden insgesamt sieben Ruftöne betrachtet, die zu äquidistanten Zeitpunkten vom Lautsprecher 5 jeweils für die Ruftondauer 35 abgegeben werden. Nach dem siebten Rufton wird in dem gezeigten Beispiel entweder der Ruf vom Benutzer entgegengenommen oder der Rufvorgang vom rufenden Teilnehmer aus abgebrochen. Der zweite Rufton beginnt zu einem zweiten Zeitpunkt $t_2 = 2 * t_1$. Der dritte Rufton beginnt zu einem dritten Zeitpunkt $t_3 = 3 * t_1$. Der vierte Rufton beginnt zu einem vierten Zeitpunkt $t_4 = 4 * t_1$. Der fünfte Rufton beginnt zu einem fünften Zeitpunkt $t_5 = 5 * t1$. Der sechste Rufton beginnt zu einem sechsten Zeitpunkt $t_6 = 6 * t_1$. Der siebte Rufton beginnt zu einem siebten Zeitpunkt $t_7 = 7 * t_1$. In der Ruftonpause zwischen dem ersten und dem zweiten Rufton wird ein zweiter Maximalwert $A_{2G}$, in der Ruftonpause zwischen dem zweiten und dem dritten Rufton ein dritter Maximalwert $A_{3G}$, in der Ruftonpause zwischen dem dritten und dem vierten Rufton ein vierter Maximalwert $A_{4G}$, in der Ruftonpause zwischen dem vierten und dem fünften Rufton ein fünfter Maximalwert $A_{5G}$, in der Ruftonpause zwischen dem fünften und dem sechsten Rufton ein sechster Maximalwert $A_{6G}$ und in der Ruftonpause zwischen dem sechsten und dem siebten Rufton ein siebter Maximalwert $A_{7G}$ des Signalpegelverlaufs 65 ermittelt, wobei $A_{7G} < A_{1G} < A_{4G} < A_{2G} < A_{3G} < A_{6G} < A_{5G}$ ist. Der Signalpegel $A_{2R}$ des zweiten Ruftons überschreitet den zweiten Maximalwert $A_{2G}$ des Signalpegelsverlaufs 65 um mindestens den ersten vorgegebenen Wert 25. Um mindestens den ersten vorgegebenen Wert 25 überschreiten auch jeweils der Signalpegel $A_{3R}$ des dritten Ruftons den dritten Maximalwert $A_{3G}$ des Signalpegelverlaufs 65, der Signalpegel $A_{4R}$ des vierten Ruftons den vierten Maximalwert $A_{4G}$ des Signalpegelverlaufs 65, der Signalpegel $A_{5R}$ des fünften Ruftons den fünften Maximalwert $A_{5G}$ des Signalpegelverlaufs 65, der Signalpegel $A_{6R}$ des sechsten Ruftons den sechsten Maximalwert $A_{6G}$ des Signalpegelverlaufs 65 und der Signalpegel $A_{7R}$ des siebten Ruftons den siebten Maximalwert $A_{7G}$ des Signalpegelverlaufs 65.

Der erste vorgegebene Wert 25 ist ein Minimalwert, so daß eine weitere Verbesserung der signalpegelabhängigen Unterscheidbarkeit der Ruftöne von den Geräuschen in der Umgebung des Telefonendgerätes 1 dadurch erzielt werden kann, daß die Signalpegel der Ruftöne die jeweiligen Maximalwerte des Signalpegelverlaufs 65 um mehr als den ersten vorgegebenen Wert 25 überschreiten.

Auf diese Weise wird der Signalpegel der Ruftöne variabel an den Signalpegelverlauf 65 angepaßt.

Für die Einstellung der Signalpegel des jeweiligen Ruftons kann an Stelle des während der jeweils vorhergehenden Ruftonpause ermittelten Maximalwertes des Signalpegelverlaufs 65 auch der Mittelwert des Signalpegelverlaufs 65 in der entsprechenden Ruftonpause herangezogen werden, wobei dann der erste vorgegebene Wert 25 sicherheitshalber etwas größer gewählt werden sollte, um starken Schwankungen des Signalpegelverlaufs 65 in der entsprechenden Ruftonpause vorzubeugen. Ein für eine Ruftonpause repräsentativer Signalpegelwert kann aus dem Signalpegelverlauf 65 auch auf beliebige andere Weise ermittelt werden, wobei der Signalpegel des der Ruftonpause nachfolgenden Ruftons um mindestens den ersten vorgegebenen Wert 25 größer als der für die Ruftonpause repräsentative Signalpegelwert des Signalpegelverlaufs 65 eingestellt werden muß. Je nach dem, wie der für eine Ruftonpause repräsentative Signalpegelwert des Signalpegelverlaufs 65 gewählt wird, kann es erforderlich sein, den ersten vorgegebenen Wert 25 ausreichend groß zu wählen, um trotz der durch den repräsentativen Signalpegelwert gegebenenfalls nicht berücksichtigten Schwankungen des Signalpegelverlaufs 65 eine ausreichende Unterscheidbarkeit des Ruftons von den Geräuschen in der Umgebung des Telefonendgerätes 1 zu gewährleisten.

Zusätzlich oder alternativ zum Signalpegelverlauf 65 kann die Steuerung 40 auch eine spektrale Dichte S des digitalisierten akustischen Signals über der Frequenz f ermitteln. Ein dabei resultierender Spektralverlauf 70 des digitalisierten akustischen Signals ist in Figur 3 dargestellt und weist zwischen einer unteren Grenzfrequenz $f_{min}$ und einer oberen Grenzfrequenz $f_{max}$ Spektralanteile auf. Spektralanteile des digitalisierten akustischen Signals, die unterhalb der unteren Grenzfrequenz $f_{min}$ und oberhalb der oberen Grenzfrequenz $f_{max}$ liegen, sind vernachlässigbar. Zwischen der unteren Grenzfrequenz $f_{min}$ und der oberen Grenzfrequenz $f_{max}$ liegt somit der Frequenzbereich des digitalisierten akustischen Signals. Zur besseren Unterscheidbarkeit der Ruftöne von Geräuschen in der Umgebung des Telefonendgerätes 1 kann die Steuerung 40 den Lautsprecher 5 über den digitalen Signalprozessor 55 veranlassen, mindestens eine Frequenz des jeweiligen Ruftones um mindestens einen zweiten vorgegebenen Wert 30 vom Frequenzbereich des digitalisierten akustischen Signals beabstandet zu erzeugen. Gemäß Figur 3 soll ein Rufton mit einer ersten Frequenz $f_1$, einer zweiten Frequenz $f_2$ und einer dritten Frequenz $f_3$ erzeugt werden, wobei $f_1 < f_2 < f_3$ ist. Die erste Frequenz $f_1$ des Ruftons ist dabei um mindestens den zweiten vorgegebenen Wert 30 größer als die obere Grenzfrequenz $f_{max}$. Der zweite vorgegebene Wert 30 ist dabei so zu wählen, daß der Rufton frequenzmäßig von den Geräuschen in der Umgebung des Telefonendgerätes 1 von einem Benutzer mit durchschnittlichem Hörvermögen mühelos unterschieden und damit erkannt werden kann. Dabei reicht es aus, wenn zumindest eine der Frequenzen des Ruftons um mindestens den zweiten vorgegebenen Wert 30 vom Frequenzbereich des Spektralverlaufs 70 abweicht. Unabhängig davon, wieviel Frequenzen der Rufton aufweist, sollte immer zumindest eine Frequenz um mindestens den zweiten vorgegebenen Wert 30 vom Frequenzbereich des Spektralverlaufs 70 abweichen. Dabei kann sich diese mindestens eine Frequenz auch unterhalb der unteren Grenzfrequenz $f_{min}$ um mindestens den zweiten vorgegebenen Wert 30 beabstandet befinden.

Analog zur variablen Anpassung des Signalpegels der Ruftöne an den Signalpegelverlauf 65 kann auch die mindestens eine Frequenz des Ruftons während dem Rufvorgang an einen sich ändernden spektralverlauf 70 angepaßt werden. Dabei kann die mindestens eine Frequenz des jeweiligen Ruftons an den in der jeweils vorhergehenden Ruftonpause in der Steuerung 40 ermittelten Spektralverlauf 70 so angepaßt werden, daß die mindestens eine Frequenz des Ruftons um mindestens den zweiten vorgegebenen Wert 30 vom Frequenzbereich des in der vorherigen Ruftonpause ermittelten Spektralverlaufs 70 beabstandet ist. Es kann jedoch auch vorgesehen sein, die für den ersten Rufton eingestellte mindestens eine Frequenz in Abhängigkeit des vor dem ersten Rufton gemessenen Spektralverlaufs 70 wie beschrieben einzustellen und diese Frequenzeinstellung für die folgenden Ruftöne beizubehalten. Dabei kann es jedoch durch Veränderung des Spektralverlaufs 70 während des Rufvorgangs zu einer Verringerung des Abstandes zwischen dem Frequenzbereich des Spektralverlaufs 70 und der mindestens einen Frequenz bzw. aller Frequenzen des Ruftons unter den zweiten vorgegebenen Wert 30 kommen, so daß eine frequenzmäßige Unterscheidung des Ruftons von den Geräuschen in der Umgebung des Telefonendgerätes 1 erschwert wird.

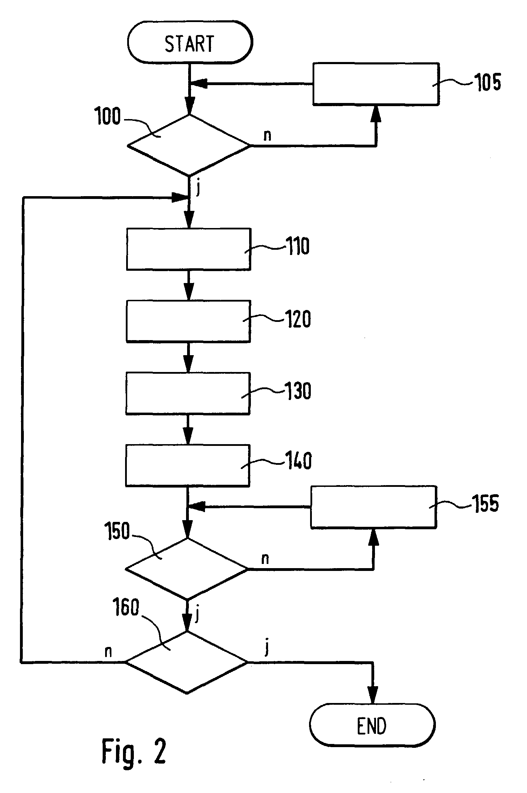

In Figur 2 ist ein Ablaufplan zur Beschreibung der Funktionsweise der Steuerung 40 dargestellt. Bei einem Programmpunkt 100 prüft die Steuerung 40, ob ein eingehender Ruf vorliegt. Ist dies der Fall, so wird zu einem Programmpunkt 110 verzweigt, andernfalls wird zu einem Programmpunkt 105 verzweigt. Bei Programmpunkt 105 durchläuft die Steuerung 40 eine Warteschleife. Anschließend wird zu Programmpunkt 100 zurückverzweigt. Bei Programmpunkt 110 veranlaßt die Steuerung 40 den Analog-/Digitalwandler 50, vom Mikrophon 10 empfangene akustische Signale zu digitalisieren und an die Steuerung 40 weiterzuleiten. Bei einem Programmpunkt 120 wird der Signalpegelverlauf 65 und/oder der Spektralverlauf 70 des digitalisierten akustischen Signals in der Steuerung 40 gemessen. Die Messung erfolgt dabei ausschließlich vor dem ersten Rufton und in Ruftonpausen. Die Steuerung 40 setzt die ermittelten Meßwerte in Eingangsparameter für den digitalen Signalprozessor 55 um. Diese Umsetzung kann durch Verwendung eines speziellen Umwandlungsalgorithmus oder einer Zuordnungstabelle erfolgen, die den ermittelten Meßwerten die zugehörigen Eingangsparameter für den digitalen Signalprozessor 55 zuordnet. Anschließend wird zu einem Programmpunkt 130 verzweigt. Bei Programmpunkt 130 leitet die Steuerung 40 die Eingangsparameter an den digitalen Signalprozessor 55 weiter. Der digitale Signalprozessor 55 stellt dann in Abhängigkeit der Eingangsparameter den erforderlichen Signalpegel und/oder die mindestens eine erforderliche Frequenz für den Rufton ein. Anschließend wird zu einem Programmpunkt 140 verzweigt. Bei Programmpunkt 140 veranlaßt die Steuerung 40 den Lautsprecher 5 nach Ende der Ruftonpause zur Wiedergabe eines Ruftons während der Ruftondauer 35 gemäß der Einstellung des digitalen Signalprozessors 55. Anschließend wird zu einem Programmpunkt 150 verzweigt. Bei Programmpunkt 150 prüft die Steuerung 40, ob eine Ruftonpause vorliegt. Ist dies der Fall, so wird zu einem Programmpunkt 160 verzweigt. Andernfalls wird zu einem Programmpunkt 155 verzweigt. Bei Programmpunkt 155 ist der Rufton noch nicht beendet und es wird eine Warteschleife durchlaufen. Anschließend wird zu Programmpunkt 150 zurückverzweigt. Bei Programmpunkt 160 wird geprüft, ob der eingehende Ruf entgegengenommen oder abgebrochen wurde. Ist dies der Fall, so wird der Programmteil verlassen, andernfalls wird zu Programmpunkt 110 zurückverzweigt. Während der Ruftonsignalisierung ist eine Messung des Signalpegelverlaufs 65 und/oder des Spektralverlaufs 70 durch die Steuerung 40 nicht sinnvoll, da sie durch den Rufton selbst beeinflußt würde. Daher kann die Analog-/Digitalwandlung des vom Mikrophon 10 empfangenen akustischen Signals während der Ruftondauer 35 abgeschaltet werden.

Bei den Geräuschen in der Umgebung des Telefonendgerätes 1 kann es sich beispielsweise um Betriebsgeräusche von Haushaltsgeräten, eines Fernsehgerätes, von Maschinen oder dergleichen handeln. Solche Geräusche können jedoch auch durch Straßenlärm oder eine Gesprächskulisse verursacht sein.

Es ist auch möglich, an Stelle einer digitalen Messung von charakteristischen Meßgrößen der Geräusche in der Umgebung des Telefonendgerätes 1 und der digitalen Einstellung des Ruftons durch den digitalen Signalprozessor 55 eine analoge Messung dieser Meßgrößen und eine analoge Einstellung des Ruftons durchzuführen. Der Analog-/Digitalwandler 50 und der digitale Signalprozessor 55 sind in diesem Fall nicht erforderlich. Es kann jedoch auch vorgesehen sein, die für die Geräusche in der Umgebung des Telefonendgerätes 1 charakteristischen Meßgrößen analog in der Steuerung 40 zu ermitteln, so daß der Analog-/Digitalwandler 50 entfallen kann, jedoch die Einstellung des Ruftons weiterhin digital durch den digitalen Signalprozessor 55 zu realisieren, wobei dann die in der Steuerung 40 ermittelten analogen Meßwerte in digitale Eingangsparameter zur Ansteuerung des digitalen Signalprozessors 55 umgewandelt werden müssen.

Bei der Einstellung des Ruftons dienen die in der vorherigen Ruftonpause ermittelten Meßwerte für den Signalpegelverlauf 65 und/oder den Spektralverlauf 70 als Vorhersagewerte für den Signalpegelverlauf 65 und/oder den Spektralverlauf 70 während der nachfolgenden Ruftondauer. Treffen diese Vorhersagewerte ein, so ist bei entsprechender Wahl des ersten vorgegebenen Wertes 25 und/oder des zweiten vorgegebenen Wertes 30 eine ausreichende Unterscheidbarkeit des Ruftons von den Geräuschen in der Umgebung des Telefonendgerätes 1 für einen Benutzer mit durchschnittlichem Hörvermögen gegeben.

Bei der Einstellung des Ruftons kann es auch vorteilhaft sein, zusätzlich zu den in der dem jeweiligen Rufton direkt vorhergehenden Ruftonpause ermittelten Geräuschmesswerte auch in früheren Ruftonpausen ermittelte Geräuschmesswerte zu berücksichtigen. Dabei können die beschriebenen Verfahren zur Ansteuerung des Ruftons in Abhängigkeit der in der vorhergehenden Ruftonpause ermittelten Geräuschmesswerte auch bei der Berücksichtigung der Geräuschmesswerte in früheren Ruftonpausen angewendet werden und die Meßergebnisse gegebenenfalls in Abhängigkeit des zeitlichen Abstands der früheren Ruftonpausen vom nächsten wiederzugebenden Rufton unterschiedlich gewichtet werden. Dabei können Geräuschmesswerte aus früheren Ruftonpausen geringer gewichtet werden als Geräuschmesswerte aus Ruftonpausen, die vergleichsweise kurz vor dem nächsten wiederzugebenden Rufton liegen. Unter Geräuschmesswerten sind hier die Signalpegel des Signalpegelverlaufs 65 und/oder die Frequenzwerte innerhalb des Spektralverlaufes 70 zu verstehen. Auf diese Weise kann eine Vorhersage über den Signalpegelverlauf 65 und/oder den Spektralverlauf 70 für die nachfolgende Ruftondauer mit noch größerer Zuverlässigkeit als bei Berücksichtigung einer einzigen Ruftonpause für die Einstellung des nachfolgenden Ruftons getroffen werden, so daß der nachfolgende Rufton mit noch höherer Wahrscheinlichkeit ausreichend von den Geräuschen in der Umgebung des Telefonendgerätes 1 unterschieden werden kann.

## Patentansprüche

1. Telekommunikationsendgerät (1) mit einem Lautsprecher (5) und einem Mikrophon (10), wobei die Lautstärke eines am Lautsprecher (5) wiedergegebenen Ruftones zur Signalisierung eines eingehenden Riffes einstellbar ist, dadurch gekennzeichnet, daß das Mikrophon (10) bei einem eingehenden Ruf Geräusche aus einer Umgebung des Telekommunikationsendgerätes (1) empfängt, daß eine Ermittlung mindestens einer charakteristischen Meßgröße (A, f) der Geräusche erfolgt und daß der Lautsprecher (5) den Rufton in Abhängigkeit der mindestens einen ermittelten Meßgröße (A, f) so abgibt, daß er sich in der mindestens einen Meßgröße (A, f) von den aus der Umgebung empfangenen Geräuschen um mindestens einen vorgegebenen Wert (25, 30) unterscheidet.

2. Telekommunikationsendgerät (1) nach Anspruch 1, dadurch gekennzeichnet, daß als Meßgröße der Signalpegel vorgesehen ist und daß der Lautsprecher (5) den Rufton mit einem Signalpegel abgibt, der den Signalpegel von den aus der Umgebung des Telekommunikationsendgerätes (1) am Mikrophon (10) empfangenen Geräuschen um mindestens einen vorgegebenen Wert (25) überschreitet.

3. Telekommunikationsendgerät (1) nach Anspruch 1 oder 2, dadurch gekennzeichnet, daß als Meßgröße die Frequenz (f) vorgesehen ist und daß der Lautsprecher (5) den Rufton mit mindestens einer Frequenz (f) abgibt, die von den Frequenzen (f) der aus der Umgebung des Telekommunikationsendgerätes (1) am Mikrophon (10) empfangenen Geräusche um mindestens einen vorgegebenen Wert (30) abweicht.

4. Telekommunikationsendgerät (1) nach Anspruch 1, 2 oder 3, dadurch gekennzeichnet, daß die Ermittlung der mindestens einen Meßgröße (A, f) vor Abgabe des ersten Ruftones eines eingehenden Rufes erfolgt.

5. Telekommunikationsendgerät (1) nach einem der vorherigen Ansprüche, dadurch gekennzeichnet, daß die Wiedergabe des Ruftons am Lautsprecher (5) aufgrund der mindestens einen zu Beginn des Rufvorgangs ermittelten Meßgröße (A, f) mit unveränderter Einstellung bis zum Ende des Rufvorgangs erfolgt.

6. Telekommunikationsendgerät (1) nach einem der vorherigen Ansprüche, dadurch gekennzeichnet, daß die Ermittlung der mindestens einen Meßgröße (A, f) in Ruftonpausen eines eingehenden Rufes erfolgt.

7. Telekommunikationsendgerät (1) nach Anspruch 6, dadurch gekennzeichnet, daß die Einstellung der Wiedergabe des Ruftons am Lautsprecher (5) während des Rufvorgangs variabel in Abhängigkeit der mindestens einen in den Ruftonpausen ermittelten Meßgröße (A, f) erfolgt.

Fig. 1

Fig. 2

Fig. 3

Fig. 4

Europäisches
Patentamt

# EUROPÄISCHER RECHERCHENBERICHT

Nummer der Anmeldung

EP 99 10 2982

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 507 482 A (NOKIA MOBILE PHONES LTD) 7. Oktober 1992 (1992-10-07) * Spalte 1, Zeile 36 – Zeile 54 * * Spalte 3, Zeile 25 – Zeile 47 * --- | 1-7 | H04M19/04 |
| A | EP 0 781 071 A (SAGEM) 25. Juni 1997 (1997-06-25) * Spalte 4, Zeile 6 – Zeile 25 * --- | 1-7 | |
| A | US 4 076 968 A (WATTENBARGER BLAKE LANE) 28. Februar 1978 (1978-02-28) * Zusammenfassung * --- | 1-7 | |
| P,X | WO 99 05850 A (NORTHERN TELECOM LTD) 4. Februar 1999 (1999-02-04) * das ganze Dokument * ----- | 1-7 | |

RECHERCHIERTE SACHGEBIETE (Int.Cl.6)

H04M

Der vorliegende Recherchenbericht wurde für alle Patentansprüche erstellt

| Recherchenort | Abschlußdatum der Recherche | Prüfer |
|---|---|---|
| DEN HAAG | 6. September 1999 | Montalbano, F |

**ANHANG ZUM EUROPÄISCHEN RECHERCHENBERICHT
ÜBER DIE EUROPÄISCHE PATENTANMELDUNG NR.**

EP 99 10 2982

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-1999

| Im Recherchenbericht angeführtes Patentdokument | Datum der Veröffentlichung | Mitglied(er) der Patentfamilie | Datum der Veröffentlichung |
|---|---|---|---|
| EP 0507482 A | 07-10-1992 | FI 87872 B<br>JP 5091166 A | 13-11-1992<br>09-04-1993 |
| EP 0781071 A | 25-06-1997 | FR 2742953 A | 27-06-1997 |
| US 4076968 A | 28-02-1978 | KEINE | |
| WO 9905850 A | 04-02-1999 | KEINE | |

EPO FORM P0461

Für nähere Einzelheiten zu diesem Anhang : siehe Amtsblatt des Europäischen Patentamts, Nr. 12/82